# EUROPÄISCHE PATENTANMELDUNG

(11) **EP 4 660 498 A1**
(43) Veröffentlichungstag der Anmeldung: **10.12.2025**
(21) Anmeldenummer: 25181468.7
(22) Anmeldetag: 06.06.2025
(51) Int. Cl.: F16K 15/06, F16K 15/18, F16K 17/04, F16K 17/168, G05D 16/20, H02K 5/136, H05K 5/06, F16K 31/122

(54) **VORRICHTUNG ZUM BETREIBEN NICHT EXPLOSIONSGESCHÜTZTER GERÄTE IN EINER EXPLOSIONSGEFÄHRDETEN UMGEBUNG**

(30) Priorität: 09.06.2024 DE 102024116050
(71) Anmelder: Gönnheimer Elektronic GmbH, 67433 Neustadt/Weinstrasse (DE)
(72) Erfinder: Gönnheimer, Hans Peter, 67434 Neustadt an der Weinstraße (DE); Gönnheimer, Christoph, 67466 Lambrecht (DE); Gönnheimer, Philipp, 67434 Neustadt an der Weinstraße (DE)
(74) Vertreter: Kurz, Andreas

(57) **Zusammenfassung**

Die Erfindung betrifft eine Vorrichtung zum Betreiben nicht explosionsgeschützter Geräte in einer explosionsgefährdeten Umgebung mit einem überdruckgekapselten Gehäuse (1), das zur Aufnahme des nicht explosionsgeschützten Geräts (2) bestimmt ist, mit einem stromaufwärts des Gehäuses (1) angeordneten Spülgaseinlass (3), über den dem Gehäuse (1) ein Schutzgas (4) unter Überdruck zuführbar ist und mit einem stromabwärts des Gehäuses (1) angeordneten Spülgasauslass (7), über den Schutzgas (4) aus dem Gehäuse (1) ableitbar ist. Zur Ableitung des Schutzgases (4) ist im Spülgasauslass (7) ein Auslassventil (8) angeordnet mit einem Ventilsitz (16) und einem Ventilkörper (30). Der Ventilkörper (30) ist mit dem ersten Ende einer Führungsachse (31) verbunden, die in einer Durchgangsbohrung (21) im Ventilsitz (16) entlang der Ventilachse (15) verschieblich gelagert ist, so dass der Ventilkörper (30) zwischen einer Schließstellung und einer Öffnungsstellung axial verstellbar ist. Mittels eines Federelements (34) ist der Ventilkörper (30) in Schließstellung gegen den Ventilsitz (16) vorgespannt. Um einen effizienten und geräteschonenden Betrieb bei moderatem Geräteaufwand zu erreichen, wird gemäß der Erfindung vorgeschlagen, dass an dem gegenüberliegenden zweiten Ende der Führungsachse (31) ein Prallelement (32) befestigt ist und an den Ventilsitz (16) ein Steuergehäuse (25) mit einer Arbeitskammer (28) anschließt, wobei das Prallelement (32) innerhalb der Arbeitskammer (28) und ohne Kontakt mit dem Steuergehäuse (25) angeordnet ist. Zudem weist das Steuergehäuse (25) einen Anschluss (27) auf, an den eine Steuerleitung (9) zur Beaufschlagung der Arbeitskammer (28) mit einem Arbeitsfluid (29) angeschlossen ist, über welchen die Arbeitskammer (28) und das darin angeordnete Prallelement (32) unter Überdruck mit dem Arbeitsfluid (29) aus der Steuerleitung (9) beaufschlagbar sind.

## Beschreibung

### Bezeichnung der Erfindung

Vorrichtung zum Betreiben nicht explosionsgeschützter Geräte in einer explosionsgefährdeten Umgebung

### Gebiet der Technik

Die Erfindung betrifft eine Vorrichtung zum Betreiben nicht explosionsgeschützter Geräte in einer explosionsgefährdeten Umgebung gemäß dem Oberbegriff des Anspruchs 1.

### Stand der Technik

Die Zündschutzart Überdruckkapselung (Ex-p) dient dem Betrieb nicht explosionsgeschützter elektrischer Betriebsmittel in einer explosionsgefährdeten Umgebung. Das Prinzip dieser Zündschutzart beruht darauf, in ein Gehäuse ein Zündschutzgas einzuspeisen und unter ständigem Überdruck gegenüber der Umgebung zu halten, so dass ein Eindringen explosiver Gasgemische ins Gehäuseinnere nicht möglich ist bzw. stets eine ausreichende Verdünnung vorhanden ist, um eine zündfähige Atmosphäre zu vermeiden.

Gemäß IEC 60079-2 ist das Gehäuse vor Inbetriebnahme des elektrischen Betriebsmittels während einer Vorspülphase frei von explosiven Gasen zu spülen. Es wird davon ausgegangen, dass das Ende der sogenannten Vorspülphase erreicht ist, wenn Spülgas über eine bestimmte Mindestdauer oder in einer bestimmten Mindestmenge über den Spülgasauslass aus dem Gehäuse geströmt ist. In der sich anschließenden Betriebsphase können unterschiedliche Betriebsarten zur Anwendung kommen, beispielsweise die Betriebsart "Ausgleich der Leckverluste", bei der bei geschlossenem Spülgasauslass lediglich der durch Leckagen verursachte Spülgasverlust ausgeglichen wird, oder die Betriebsart "Ständige Durchspülung", bei der eine Freisetzungsstelle für explosive Gase innerhalb des Gehäuses liegt, so dass mit Hilfe einer ständigen Durchspülung eine Verdünnung des explosiven Gases erfolgt.

Vor allem während der Vorspülphase und im Übergang zur Betriebsphase kommt es bei überdruckgekapselten Gehäusen zu Druckschwankungen und Druckspitzen, die je nach Größe des Gehäuses zu erheblichen Belastungen des Gehäuses führen und durch konstruktiven Mehraufwand zu berücksichtigen sind.

Aus der DE 44 18 158 A1 ist eine Vorrichtung bekannt, deren Gehäuse im Spülgaseinlass ein Proportionalventil aufweist und im Spülgasauslass eine Durchflussmesseinrichtung und ein Absperrventil. Während der Vorspülphase wird bei geöffnetem Proportionalventil und geöffnetem Absperrventil die Spülgasmenge durch Integration der Durchflussrate über die Zeit ermittelt. In der Betriebsphase wird bei geschlossenem Absperrventil der Überdruck im Gehäuse mittels des Proportionalventils geregelt. Mit dieser Vorrichtung ist es gelungen, übermäßige Druckbelastungen auf das Gehäuse sowohl während der Vorspülphase als auch Betriebsphase zu vermeiden und gleichzeitig die Menge erforderlichen Spülgases zu reduzieren.

Eine Weiterentwicklung der vorbeschriebenen Vorrichtung ist Gegenstand der DE 10 2008 024 836 B3, bei der sowohl im Spülgaseinlass als auch im Spülgasauslass jeweils ein Proportionalventil angeordnet ist. Das Proportionalventil im Spülgaseinlass wird in einem ersten Regelkreis in Abhängigkeit des Differenzdrucks im Gehäuse geregelt, das Proportionalventil im Spülgasauslass in einem zweiten Regelkreis in Abhängigkeit der Spülgasmenge im Spülgasauslass, welche mit Hilfe einer Durchflussmesseinrichtung bestimmt wird. Im Zusammenwirken der beiden Regelkreise kann eine solche Vorrichtung optimal an die spezifischen Anforderungen des jeweiligen Einsatzzwecks angepasst werden.

Eine demgegenüber vereinfachte Vorrichtung ist aus der DE 103 13 203 A1 bekannt. Dort wird vorgeschlagen, während des Vorspülens des Gehäuses einen Spüldruck vorzugeben, der größer ist als der Öffnungsdruck des Auslassventils im Spülgasauslass. Dadurch wird sichergestellt, dass beim Erreichen des Spüldrucks das Auslassventil geöffnet ist und ein Luftaustausch über das geöffnete Auslassventil erfolgt. Eine Durchflussmesseinrichtung im Spülgasauslass ist bei dieser Lösung entbehrlich.

Die EP 3 772 048 A1 beschreibt eine Überdruckkapselung mit einem über einen Spülgaseinlass an eine Spülgasquelle angeschlossenen Gehäuse, mit einem zwischen der Spülgasquelle und dem Spülgaseinlass angeordneten Einlassventil, mit einem den Innendruck in dem Gehäuse überwachenden Druckmesser oder Druckwächter, mit einer Steuereinrichtung zur Steuerung des Einlassventils zur Einhaltung eines Soll-Innendruck im Gehäuse, mit einem den Spülgaszufluss erfassenden Durchflussmesser zwischen Spülgasquelle und Spülgaseinlass, mit einer Auswerteeinrichtung zur Vorausberechnung des Spülgaszuflusses im Hinblick auf die Überschreitung eines Schwellenwerts und mit einem aus dem Gehäuse führenden Spülgasauslass. In den Spülgasauslass kann ein Auslassventil integriert sein, welches im Normalbetrieb geschlossen und nur während des Spülvorgangs geöffnet ist, um das Gehäuse vor der Inbetriebnahme oder nach Störungen mit einer geforderten Mindest-Spülgasmenge spülen zu können.

Ferner ist in der DE 37 25 995 C2 ein Spülgasfilter zum Abscheiden fester Bestandteile aus einem Spülgas beschrieben. Das Spülgasfilter besitzt ein Filtergehäuse zur Aufnahme eines auf einem Filterhalter befestigten Filterelements, wobei das hohlzylindrische Filtergehäuse an seiner Innenwandung einen ringförmigen, sich quer zur Strömungsrichtung des Spülgases erstreckenden Vorsprung aufweist. Dessen eine Stirnseite besitzt eine ringförmige Dichtfläche, an die ein tellerförmiger Filterhalter unter der Wirkung eines Federelementes gedrückt wird.

### Zusammenfassung der Erfindung

Vor diesem Hintergrund besteht die Aufgabe vorliegender Erfindung darin, eine Vorrichtung der eingangs beschriebenen Art im Hinblick auf einen effizienten und gleichzeitig geräteschonenden Betrieb bei gleichzeitig moderatem Geräteaufwand anzugeben.

Diese Aufgabe wird durch eine Vorrichtung mit den Merkmalen des Anspruchs 1 gelöst.

Vorteilhafte Weiterbildungen ergeben sich aus den Unteransprüchen.

Der erfindungsgemäßen Lösung liegt der Gedanke zugrunde, dass sowohl für die Vorspülphase als auch die Betriebsphase dasselbe Auslassventil zum Einsatz kommt, wobei der Öffnungsdruck für das Auslassventil während der Vorspülphase unabhängig vom Überdruck im Inneren des Gehäuses erzeugt wird und der Öffnungsdruck für das Auslassventil während der Betriebphase in Abhängigkeit von Überdruck im Gehäuseinneren.

Das das Auslassventil in Schließstellung haltende Federelement ist also so ausgebildet, dass in der Vorspülphase die Federkraft kleiner ist als die vom Überdruck in der Arbeitskammer auf das Auslassventil ausgeübte Stellkraft und dass in der Betriebsphase die Federkraft größer ist als die vom Überdruck im Gehäuse auf das Auslassventil ausgeübte Druckkraft.

Durch die separate Erzeugung des Öffnungsdrucks für das Auslassventil muss für den Beginn der Vorspülphase nicht gewartet werden, bis im Gehäuseinneren der Öffnungsdruck des Auslassventils erreicht ist. Stattdessen kann das Auslassventil sofort mit ausreichendem Öffnungsdruck beaufschlagt werden, wodurch die Vorspülphase früher startet. Gleichzeitig wird das Auslassventil infolge des hohen erzeugten Drucks unmittelbar nach Druckbeaufschlagung vollständig geöffnet, was einen maximalen Spülgasdurchfluss ermöglicht. Auf diese Weise ist es möglich, die Vorspülphase zu einem frühestmöglichen Zeitpunkt zu beginnen und mit einem größtmöglichen Spülgasdurchfluss durch den Spülgasauslass auszuführen. Jede dieser Maßnahmen für sich und insbesondere beide zusammen führen zu einer Verkürzung der Vorspülphase und damit schnelleren Betriebsbereitschaft der Vorrichtung.

Da der Öffnungsdruck für das Auslassventil in der Vorspülphase nicht durch den Überdruck im Gehäuseinneren erzeugt wird, entstehen keine Druckspitzen, die bei der Überwindung des Öffnungsdrucks des Auslassventils regelmäßig auftreten. Die sofortige Öffnung des Auslassventils wirkt einer übermäßig hohen Entwicklung des Überdrucks entgegen. Die Belastungen des Gehäuses aufgrund des Überdrucks während der Vorspülphase sind bei einer erfindungsgemäßen Vorrichtung daher vergleichsweise gering, so dass die Vorspülphase geräteschonender durchgeführt werden kann. Die auf das Gehäuse einwirkenden geringeren Druckkräfte erlauben, das Gehäuse weniger aufwändig zu konstruieren.

In der Betriebsphase ist hingegen ist der im Gehäuseinneren vorhandene Überdruck so gering, dass das Auslassventil von dem Federelement in Schließstellung gehalten wird. Überschreitet jedoch der vorhandene Überdruck einen maximal zulässigen Überdruck, öffnet das Auslassventil. Das sensible Ansprechverhalten des Auslassventils bei den im Vergleich zur Vorspülphase wesentlich geringeren Überdrücken bleibt erhalten und damit auch die Betriebssicherheit einer erfindungsgemäßen Vorrichtung.

Da sowohl in der Vorspülphase als auch Betriebsphase dasselbe Einlassventil zum Einsatz kommt, lassen sich die genannten Vorteile mit einem vergleichsweise geringen gerätetechnischen Aufwand realisieren. Die Erfindung zeichnet sich somit auch in dieser Hinsicht durch eine außerordentliche Wirtschaftlichkeit aus.

Vorteilhafterweise ist das Steuergehäuse zylindrisch ausgebildet mit einer zur Ventilachse koaxialen Längsachse, wodurch sich ein kompakter Aufbau des Auslassventils und eine in der Ventilachse wirkende Kraft zum Öffnen des Auslassventils ergibt. Letzteres wird zudem begünstigt, indem die Prallfläche des Prallelements orthogonal zur Ventilachse bzw. Führungsachse verläuft.

Um in der Betriebsphase ein Verstellen des Ventilkörpers in oder entgegen der Kraft des Federelements nicht durch das Prallelement zu behindern, was zu einer höheren Kraft zum Öffnen des Auslassventils führen würde, ist das Prallelement in vorteilhafter Weiterbildung der Erfindung kontaktfrei oder zumindest weitestgehend kontaktfrei zum Steuergehäuse angeordnet. Vorzugsweise halten das Prallelement und das Steuergehäuse einen lichten Abstand senkrecht zur Ventilachse ein, wodurch zwischen Prallelement und Steuergehäuse ein umlaufender Spalt entsteht. Als vorteilhaft hat es sich erwiesen, wenn die lichte Weite des Spalts weniger als 10 % der gleichgerichteten Weite der Arbeitskammer beträgt, insbesondere wenn die lichte Weite des Spalts in einem Bereich zwischen 0,5 % und 3 % liegt. Weitestgehend kontaktfrei soll bedeuten, dass das Prallelement nur an einem oder einigen wenigen Punkten das Steuergehäuse berührt.

Für den ungewollten Fall, dass es beim Verstellen des Ventilkörpers dennoch zu einem kurzeitigen Kontakt zwischen Steuergehäuse und Prallelement kommen sollte, besteht das Prallelement vorteilhafterweise ganz oder zumindest an seinem Umfang aus einem Material mit geringem Reibungskoeffizienten, um durch den Kontakt keine nennenswerte Störkräfte zu übertragen.

Eine möglichst behinderungsfreie Bewegung des Ventilkörpers wird zudem erreicht, indem gemäß einer vorteilhaften Ausführungsform der Erfindung die Arbeitskammer stromabwärts des Prallelements eine oder mehrere Durchlässe zur Entlüftung der Arbeitskammer besitzt.

Um den gerätetechnischen Aufwand weiter zu reduzieren, ist es von Vorteil, wenn als Arbeitsfluid das der Vorrichtung zugeführte Spülgas verwendet wird. Zu diesem Zweck ist die Steuerleitung vorteilhafterweise aus dem Spülgaseinlass mit Spülgas gespeist.

Um den Spülgasdurchfluss im Spülgasauslass zu überwachen oder zu erfassen, ist in Weiterbildung der Erfindung stromaufwärts des Auslassventils eine Durchflussmesseinrichtung oder ein Durchflusswächter in den Spülgasauslass integriert. Dadurch wird gewährleistet, dass das Arbeitsfluid, das erst im Bereich des Auslassventils in den Spülgasauslass mündet, nicht das tatsächliche Spülgasvolumen verfälscht.

Die Durchflussmesseinrichtung bzw. der Durchflusswächter umfasst vorteilhafterweise eine Messblende und eine Einrichtung zur Erfassung des Differenzdrucks an der Messblende, was zu besonders exakten Spülgasdurchflusswerten führt.

Ohne sich darauf einzuschränken wird die Erfindung nachstehend anhand eines in der Zeichnung dargestellten Ausführungsbeispiels näher erläutert, wobei weitere Merkmale und Vorteile der Erfindung offenbar werden.

### Kurze Beschreibung der Zeichnungen

Es zeigt
- Fig. 1: eine erfindungsgemäße Vorrichtung in schematischer Darstellung,
- Fig. 2: einen Längsschnitt durch den Spülgasauslass der in Fig. 1 dargestellten Vorrichtung,
- Fig. 3: in einer geschnittenen Schrägansicht den in Fig. 2 gezeigten Spülgasauslass bei geschlossenem Auslassventil während der Betriebsphase,
- Fig. 4: in einer geschnittenen Schrägansicht das in Fig. 3 dargestellte Auslassventil in Öffnungsstellung während der Vorspülphase,
- Fig. 5: den Verlauf des Überdrucks im Gehäuse während der Vorspülphase und Betriebsphase gemäß der Erfindung p_{Erf} und gemäß des Standes der Technik P_{SdT}, und
- Fig. 6: den Verlauf des Spülgasdurchflusses durch den Spülgasauslass während der Vorspülphase und Betriebsphase gemäß der Erfindung Q_{Erf} und gemäß des Standes der Technik Q_{SdT}.

### Beschreibung der Ausführungsformen

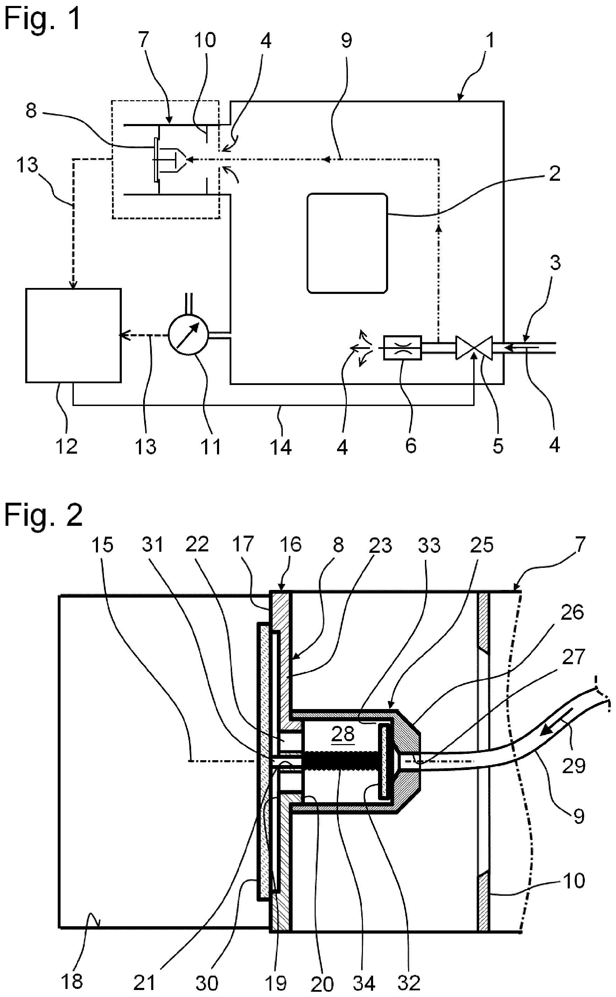

In Fig. 1 ist eine erfindungsgemäße Vorrichtung in schematischer Darstellung gezeigt. Die Vorrichtung besitzt ein Gehäuse 1, in dem ein nicht explosionsgeschütztes elektrisches Gerät 2 aufgenommen ist. Um das elektrische Gerät 2 in einer explosionsgefährdeten Umgebung betreiben zu können, ist das Gehäuse 1 entsprechend der Zündschutzart Überdruckkapselung (Ex-p) gegen Eindringen explosionsfähiger Gasgemische ins Gehäuseinnere geschützt.

Die Zündschutzart Überdruckkapselung (Ex-p) sieht vor, während des Betriebs des Geräts (Betriebsphase) die Bildung einer explosionsfähigen Atmosphäre im Inneren des Gehäuses 1 durch Aufrechterhaltung eines Überdrucks und gegebenenfalls Durchspülen des Gehäuses 1 zur Verdünnung zündfähiger Gasgemische zu verhindern. Abhängig von der jeweiligen Anwendung und der vorhandenen Explosionsschutzzone kann vor der Inbetriebnahme des Gerätes 2 ein Vorspülen des Gehäuses 1 mit Spülgas 4 notwendig sein, um gegebenenfalls ein im Gehäuse 1 vorhandenes zündfähiges Gasgemisch zu entfernen (Vorspülphase).

Zur Überdruckkapselung weist das Gehäuse 1 einen Spülgasseinlass 3 auf, über welchen dem Gehäuse 1 aus einem nicht weiter dargstellten Gasspeicher Spülgas 4, beispielsweise Inertgas, Luft oder dergleichen, unter Druck zugeführt wird. Im Spülgaseinlass 3 ist eine Einlassventil 5 angeordnet, das den Zufluss an Spülgas 4 steuert. Ohne sich darauf einzuschränken besteht im vorliegenden Fall das Einlassventil 5 aus einem Digitalventil, kann aber ebenso von einem Proportionalventil gebildet sein. Dem Einlassventil 4 ist in Strömungsrichtung ein Drosselventil 6 nachgeschaltet, das den Druck des in das Gehäuse 1 einströmenden Spülgases 4 begrenzt.

An der gegenüberliegenden Seite des Gehäuses 1 befindet sich ein Spülgasauslass 7, über welchen während der Vorspülphase und Betriebsphase überschüssiges oder schädliches Spülgas 4 aus dem Gehäuse 1 abgeleitet wird. Ein im Spülgasauslass 7 angeordnetes Auslassventil 8 steuert dabei das das Gehäuse 1 verlassende Spülgas 4. Das Auslassventil 4 ist Gegenstand der Fig. 2 bis 4 und wird dort im Einzelnen näher beschrieben.

Zur Betätigung des Auslassventils 8 zweigt im Spülgaseinlass 7 zwischen Einlassventil 5 und Drosselventil 6 eine Steuerleitung 9 ab, die in ihrem weiteren Verlauf an das Auslassventil 8 anschließt. Das durch die Steuerleitung 9 zum Auslassventil 8 strömende Spülgas 4 steht folglich unter einem wesentlich höheren Druck als das im Inneren des Gehäuses 1 vorhandene. Beispielsweise liegt der Druck in der Steuerleitung im Bar-Bereich, der Überdruck im Gehäuseinneren während der Vorspülphase und Betriebsphase hingegen im Millibar-Bereich.

Ferner ist in den Spülgasauslass 7 stromaufwärts des Auslassventils 4 eine Durchflussmesseinrichtung 10 integriert, die den momentanen Spülgasdurchfluss misst, um auf Basis der Messwerte die Spülgasmenge bestimmen zu können. Anstelle der Durchflussmesseinrichtung 10 kann auch ein Durchflusswächter verwendet werden, der den Spülgasdurchfluss im Hinblick auf einen Mindestwert überwacht und bei Unterschreiten ein Signal gibt.

Zur Überwachung des Drucks im Inneren des Gehäuses 1 relativ zum Umgebungsdruck außerhalb des Gehäuses 1 besitzt die Vorrichtung zudem eine Differenzdruckmesseinrichtung 11.

Die aus der Durchflussmesseinrichtung 10 und Differenzdruckmesseinrichtung 11 gewonnenen Messwerte werden einer Mess- und Steuereinrichtung 12 zugeführt, was durch die gestrichelten Linien 13 versinnbildlicht ist. Die Mess- und Steuereinrichtung 12 besteht beispielsweise aus einem Mikrocontroller, der die erhaltenen Daten verarbeitet und darauf beruhend Steuersignale an das Einlassventil 5 ausgibt, was mit der Linie 14 zum Ausdruck gebracht ist.

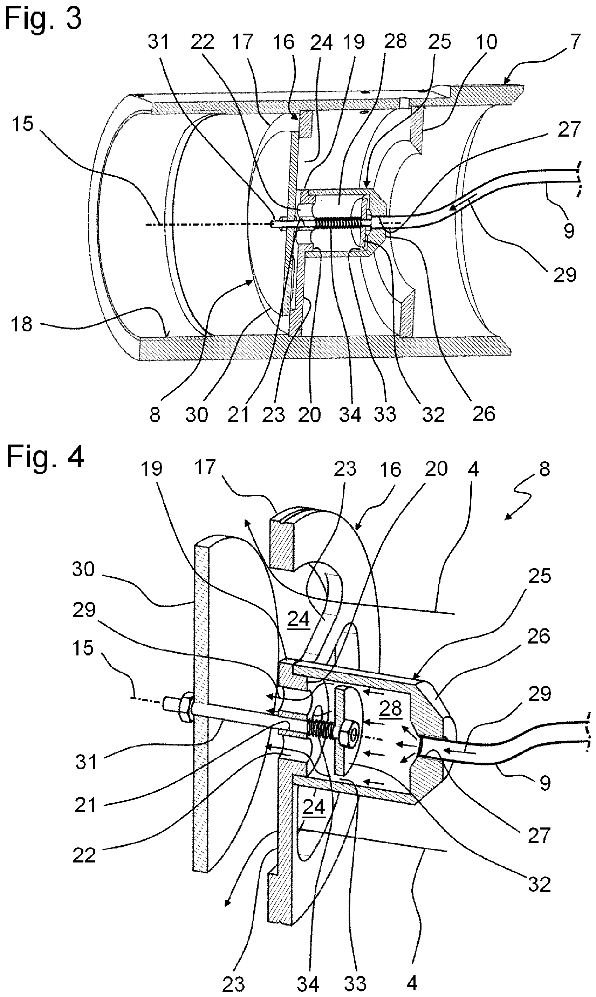

Aufbau und Funktion des Auslassventils 8 gehen aus den Fig. 2 bis 4 näher hervor, wobei die Fig. 2 und 3 das Auslassventil 8 in einer geschlossenen Stellung zeigen, wie es beispielsweise überwiegend bei der Betriebsart "Ausgleich der Leckverluste" während der Betriebsphase der Fall ist. Hingegen zeigt Fig. 4 das Auslassventil 8 in offener Stellung während der Vorspülphase. In den Fig. 2 bis 4 ist die Ventilachse mit dem Bezugszeichen 15 gekennzeichnet und fällt im vorliegenden Ausführungsbeispiel mit der Längsachse des Spülgasauslasses 7 zusammen.

Wesentlicher Bestandteil des Auslassventils 8 ist zunächst ein tellerartiger Ventilsitz 16, mit einem äußeren Ringteil 17, das mit seinem Außenumfang formschlüssig und gasdicht an den kreisförmigen Innenumfang 18 des Spülgasauslasses 7 anschließt. Das axiale Zentrum des Ventilsitzes 16 wird von einer Lagerscheibe 19 gebildet, die auf der Anströmseite des Auslassventils 8 einen die Ventilachse 15 koaxial umlaufenden, zylindrischen Sockel 20 besitzt, wodurch die Lagerscheibe 19 eine gegenüber dem Ringteil 17 größere axiale Dicke aufweist. Die Lagerscheibe 19 weist eine zur Ventilachse 15 koaxiale Durchgangsbohrung 21 auf, um die sich mehrere achsparallle Durchlässen 22 gruppieren.

Von dem Ringteil 17 führen drei in einheitlichen Umfangsabstand angeordnete Radialstreben 23 zur Lagerscheibe 19, um diese in der Ventilachse 15 zu halten. Zwischen den Radialstreben 23 dem Ringteil 17 und der Lagerscheibe 19 bleiben freie Bereiche, die Öffnungen 24 für den Durchtritt des Spülgases 4 bei geöffnetem Auslassventil 8 bilden (s. Fig. 4).

Auf der Anströmseite des Auslassventils 8 befindet sich zudem ein hohlzylindrisches Steuergehäuse 25, dessen Längsachse koaxial zur Ventilachse 15 verläuft. Der Außenumfang des Steuergehäuses 25 entspricht in Form und Durchmesser dem Außenumfang der Lagerscheibe 19, der Innenumfang des Steuergehäuses 25 in Form und Durchmesser dem Außenumfang des Sockels 20, so dass das Steuergehäuse 25 zum Anschluss an den Ventilsitz 16 mit seinem einen Ende auf den Sockel 20 aufschiebbar oder aufschraubbar ist. Das gegenüberliegende andere Ende des Steuergehäuses 25 bildet eine dickwandige kegelstumpfförmige Stirnwand 26, deren spitzes Ende entgegen der Strömungsrichtung zeigt. Die Stirnwand 26 ist axial von einer Anschlussbohrung 27 durchsetzt, an welche die Steuerleitung 9 anschließt.

Das Steuergehäuse 25 bildet mit Lagerscheibe 19 und Stirnwand 26 eine zylindrische Arbeitskammer 28, welche über die Anschlussbohrung 27 mit einem Arbeitsfluid 29 aus der Steuerleitung 9 beaufschlagbar ist. Das Arbeitsfluid 29 entspricht im vorliegenden Ausführungsbeispiel dem Spülgas 4, welches im Spülgaseinlass 3 stromaufwärts des Drosselventils 6 abgezweigt wird (s. Fig. 1). Über die aus der Arbeitskammer 28 führenden Durchlässe 22 kann das Arbeitsfluid 29 aus der Arbeitskammer 28 entweichen.

Im vorliegenden Ausführungsbeispiel wird der Ventilkörper 30 des Auslassventils 8 von einer kreisförmigen Dichtscheibe mit planer Dichtfläche gebildet, ohne sich jedoch darauf einzuschränken. Ebenso kann der Ventilkörper eine kugel- oder kegelförmige Dichtfläche besitzen oder von Klappen oder einer Membran gebildet sein.

Der Ventilkörper 30 sitzt mit einer zentrischen Aufnahmebohrung starr auf dem stromabwärts liegenden ersten Ende einer stabförmigen Führungsachse 31. Die Führungsachse 31 erstreckt sich durch die Durchgangsbohrung 21 der Lagerscheibe 19, in der sie axial verschieblich gelagert ist. Das stromaufwärts liegende zweite Ende der Führungsachse 31 ragt somit axial in die Arbeitskammer 28 und trägt am zweiten Ende ein orthogonal zur Führungsachse 31 ausgerichtetes Prallelement 32 in Form einer Prallscheibe. Das Prallelement 32 befindet sich somit innerhalb der Arbeitskammer 28, in der es ohne Kontakt mit dem Steuergehäuse 25 angeordnet ist. Das Prallelement 32 ist dabei an die Geometrie der Arbeitskammer 28 angepasst; das heißt, der Außenumfang der Prallscheibe 32 folgt dem Innenumfang der Arbeitskammer 28 unter Einhaltung eines über den Umfang konstanten Ringspalts 33. Durch den Ringspalt 33 wird erreicht, dass die Relativbewegung zwischen Prallscheibe 32 und Steuergehäuse 25 beim Wechsel des Ventilkörpers 30 zwischen Schließ- und Öffnungsstellung keinen zusätzlichen Widerstand induziert.

Zwischen Prallelement 32 und Lagerscheibe 19 ist auf die Führungsachse 31 ein auf Druck vorgespanntes Federelement 34 aufgeschoben, mit welchem der Ventilkörper 30 gegen den Ventilsitz 16 vorgespannt ist, so dass das Auslassventil 8 von dem Federelement 34 in Schließstellung gehalten bzw. in diese zurückgestellt wird, solange keine die Federkraft übersteigenden äußeren Kräfte auf den Ventilkörper 30 wirken.

Die Länge der Führungsachse 31 ist so bemessen, dass in Schließstellung das Prallelement 32 im Bereich der Stirnwand 26 des Steuergehäuses 25 angeordnet ist. In Öffnungsstellung hingegen ist das Prallelement 32 unter Stauchung des Federelements 34 der Lagerscheibe 19 angenähert. Aufgrund der starren Kopplung von Ventilkörper 30 und Prallelement 32 durch die Führungsachse 31 wird eine Bewegung der Prallplatte 32 unmittelbar auf den Ventilkörper 30 übertragen und umgekehrt.

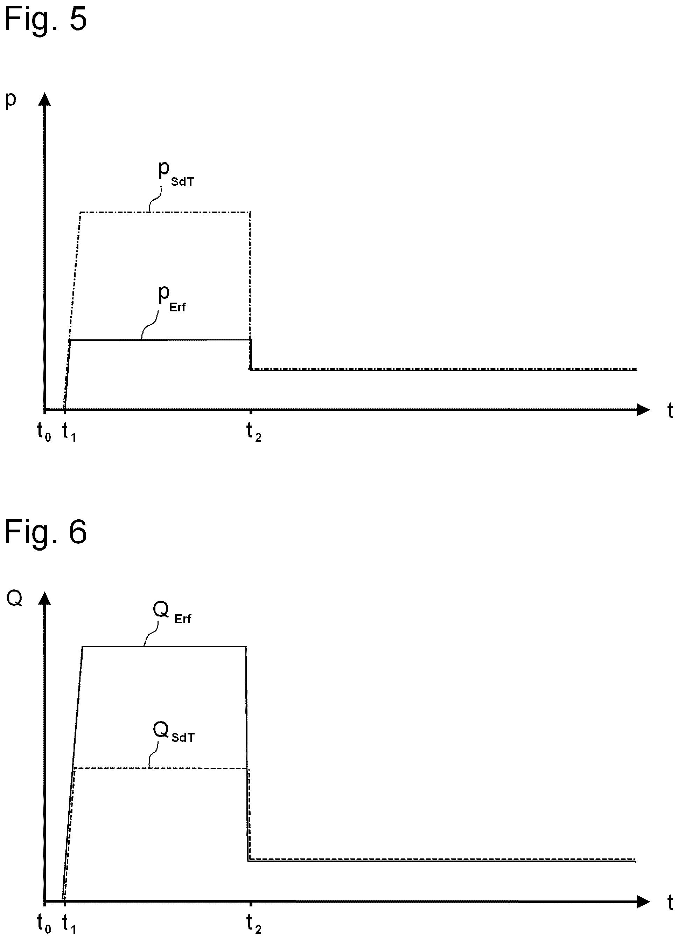

Der Betrieb einer erfindungsgemäßen Vorrichtung wird nachfolgend unter zusätzlicher Bezugnahme auf die Fig. 5 und 6 näher erläutert, die den zeitlichen Verlauf des Differenzdrucks p_{Erf} zwischen Gehäuseinnerem und der Umgebung sowie des Spülgasdurchflusses Q_{Erf} zeigen. Der Zeitpunkt t₀ entspricht dabei dem Zeitpunkt des Einschaltens der Vorrichtung, der Zeitpunkt t₁ dem Beginn der Vorspülphase und der Zeitpunkt t₂ dem Beginn der Betriebsphase.

In Ruhestellung der Vorrichtung befindet sich das Auslassventil 8 in Schließstellung, in der das Federelement 34 den Ventilkörper 30 gegen den Ventilsitz16 drückt. Nach dem Einschalten der Vorrichtung zum Zeitpunkt t₀ werden alle Systemkomponenten initialisiert, bevor die Vorrichtung zum Zeitpunkt t₁ den Betrieb aufnimmt. Dieser sieht zunächst ein Vorspülen des Gehäuses 1 mit Luft oder einem Schutzgas über eine vorgegebene Spüldauer oder ein vorgegebenes Spülvolumen vor. Dazu wird von der Mess- und Steuereinrichtung 12 ein Steuersignal an das Einlassventil 5 zum Öffnen desselben gegeben. Über den Spülgaseinlass 3, der unter Druck mit Spülgas 4 aus einem Spülgasspeicher beaufschlagt ist, gelangt Spülgas 4 über das Drosselventil 6 mit reduziertem Druck in das Gehäuse 1. Gleichzeitig wird Spülgas 4 mit vergleichsweise höherem Druck vor dem Drosselventil 6 als Arbeitsfluid 29 abgezweigt und über die Steuerleitung 9 dem Auslassventil 8 zugeführt, wo es unter hohem Druck von beispielsweise 2 bar in die Arbeitskammer 28 des Steuergehäuses 25 strömt.

In der Arbeitskammer 28 trifft das Arbeitsfluid 29 frontal auf das Prallelement 32, wobei die dabei auf das Prallelement 32 einwirkende Kraft größer ist als die Kraft des Federelements 34. In der Folge wird das Prallelement 32 entgegen der Kraft des Federelements 34 und unter dessen Stauchung in Richtung der Lagerscheibe 19 gedrückt. Die Axialbewegung wird über die Führungsachse 31 auf den Ventilkörper 30 übertragen, der mit Erreichen der Öffnungsstellung die Öffnungen 24 maximal freigibt, so dass Spülgas 4 aus dem Inneren des Gehäuses 1 durch den Spülgasauslass 7 abgeleitet werden kann.

Durch die anhaltende Zufuhr an Spülgas 4 über den Spülgaseinlass 3 baut sich im Gehäuse 1 ab dem Zeitpunkt t₁ der zum Vorspülen erforderliche Mindestdruck pᵥ auf, der von der von der Differenzmesseinrichtung 11 registriert und an die Mess- und Steuereinrichtung 12 gemeldet wird. Ab diesem Zeitpunkt beginnt die Vorspülphase, in der sich das Auslassventil 8 in der in Fig. 4 gezeigten Funktionsstellung befindet. Das in die Arbeitskammer 28 einströmende Arbeitsfluid 29 hält den Ventilkörper 30 durch die kontinuierliche Anströmung des Prallelements 32 in Öffnungsstellung, wobei das Prallelement 32 im Bereich des Ringspalts 33 umströmt wird. Auf der Abströmseite der Prallelements 32 entweicht das Arbeitsfluid über die Durchlässe 22 aus der Arbeitskammer 28 und vermischt sich mit dem Spülgas 4 aus dem Gehäuseinneren.

Der während der Vorspülphase durch den Spülgasauslass 7 aus dem Gehäuse 1 tretende Spülgasstrom wird von der Durchflussmesseinrichtung 10 erfasst und die entsprechenden Messwerte der Mess- und Steuereinrichtung 12 übermittelt. Diese überwacht, dass einerseits der erforderliche Mindestdruck während der Vorspülphase nicht unterschritten wird und andererseits eine ausreichende Durchspülung des Gehäuses 1 gewährleistet ist. Letzteres erfolgt durch Überwachung einer Mindestspüldauer bei Einhalten eines Mindestüberdrucks im Gehäuseinneren oder durch Integration des Spülgasdurchflusses im Spülgasauslass 8 über die Zeit bis das erforderliche Spülgasvolumen erreicht ist.

Zur Beendigung der Vorspülphase gibt die Mess- und Steuereinrichtung 12 ein Steuersignal zum Schließen des Einlassventils 5, so dass nur noch die zur Aufrechterhaltung des Mindestüberdrucks im Gehäuse 1 während der Betriebsphase erforderliche Menge an Spülgas 4 zugeführt wird.

Das Schließen des Einlassventils 5 bewirkt eine Druckabsenkung in der Steuerleitung 9 mit dem Ergebnis, dass die Anströmung des Prallelements 32 mit Arbeitsfluid 29 zum Erliegen kommt und damit die von dem Arbeitsfluid 29 auf das Prallelement 32 ausgeübte Stellkraft. In der Folge überwiegt die Rückstellkraft des Federelements 34, die den Ventilkörper 30 gegen den Ventilsitz 16 drückt und das Auslassventil 8 schließt.

Mit dem Schließen des Auslassventils 8 beginnt die Betriebsphase, die in den Fig. 5 und 6 dem Zeitpunkt t₂ entspricht. Das Auslassventil 8 befindet sich in Schließstellung entsprechend der Darstellung in Fig. 3. Lediglich bei Überschreiten des im Vergleich zur Vorspülphase wesentlich geringeren maximalen Überdrucks im Gehäuseinneren wird der Öffnungsdruck des Auslassventils 8 erreicht. Der dabei auf den Ventilkörper 30 einwirkende Druck bewirkt ein kurzeitiges Öffnen des Auslassventils 8, um den Überdruck zu reduzieren.

## Patentansprüche

1. Vorrichtung zum Betreiben nicht explosionsgeschützter Geräte in einer explosionsgefährdeten Umgebung
- mit einem überdruckgekapselten Gehäuse (1), das zur Aufnahme eines nicht explosionsgeschützten Geräts (2) bestimmt ist,
- mit einem stromaufwärts des Gehäuses (1) angeordneten Spülgaseinlass (3), über den dem Gehäuse (1) ein Schutzgas (4) unter Überdruck zuführbar ist,
- mit einem stromabwärts des Gehäuses (1) angeordneten Spülgasauslass (7), über den Schutzgas (4) aus dem Gehäuse (1) ableitbar ist, wobei
- im Spülgasauslass (7) zur Ableitung des Schutzgases (4) ein Auslassventil (8) angeordnet ist mit einem Ventilsitz (16) und einem Ventilkörper (30), wobei der Ventilkörper (30) mit dem ersten Ende einer Führungsachse (31) verbunden ist, die in einer Durchgangsbohrung (21) im Ventilsitz (16) entlang der Ventilachse (15) verschieblich gelagert ist, so dass
- der Ventilkörper (30) zwischen einer Schließstellung und einer Öffnungsstellung axial verstellbar ist, wobei
- der Ventilkörper (30) in Schließstellung von einem Federelement (34) gegen den Ventilsitz (16) vorgespannt ist, **dadurch gekennzeichnet, dass**
- an dem gegenüberliegenden zweiten Ende der Führungsachse (31) ein Prallelement (32) befestigt ist und
- an den Ventilsitz (16) ein Steuergehäuse (25) mit einer Arbeitskammer (28) anschließt, wobei
- das Prallelement (32) innerhalb der Arbeitskammer (28) angeordnet ist, und wobei
- das Steuergehäuse (25) einen Anschluss (27) aufweist, an den eine Steuerleitung (9) zur Beaufschlagung der Arbeitskammer (28) mit einem Arbeitsfluid (29) angeschlossen ist,
- über welchen die Arbeitskammer (28) und das darin angeordnete Prallelement (32) unter Überdruck mit dem Arbeitsfluid (29) aus der Steuerleitung (9) beaufschlagbar sind.

2. Vorrichtung nach Anspruch 1, **dadurch gekennzeichnet, dass** das Steuergehäuse (25) zylindrisch ausgebildet ist und die Längsachse des Steuergehäuses (25) in Verstellrichtung des Ventilkörpers (30) ausgerichtet ist.

3. Vorrichtung nach Anspruch 2, **dadurch gekennzeichnet, dass** das Steuergehäuse (25) kreiszylindrisch ausgebildet ist.

4. Vorrichtung nach Anspruch 2 oder 3, **dadurch gekennzeichnet, dass** die Längsachse des Steuergehäuses (25) in Verstellrichtung des Ventilkörpers (30) koaxial zur Ventilachse (15) ausgerichtet ist.

5. Vorrichtung nach einem der Ansprüche 1 bis 4, **dadurch gekennzeichnet, dass** das Prallelement (32) eine orthogonal zur Längsachse der Führungsachse (31) verlaufende Prallfläche aufweist.

6. Vorrichtung nach Anspruch 5, **dadurch gekennzeichnet, dass** die Prallfläche des Prallelements (32) einen kreisförmigen Umfang besitzt.

7. Vorrichtung nach einem der Ansprüche 1 bis 6, **dadurch gekennzeichnet, dass** das Prallelement (32) ganz oder zumindest am Umfang von einem Material mit geringem Reibungskoeffizienten gebildet ist.

8. Vorrichtung nach einem der Ansprüche 1 bis 7, **dadurch gekennzeichnet, dass** Steuergehäuse (25) und Umfang des Prallelements (32) zur Bildung eines umlaufenden Spalts (33) im lichten Abstand zueinander angeordnet sind.

9. Vorrichtung nach Anspruch 8, **dadurch gekennzeichnet, dass** die Weite des Spalts (33) kleiner ist als 10 % der gleichgerichteten lichten Weite der Arbeitskammer (28).

10. Vorrichtung nach Anspruch 8 oder 9, **dadurch gekennzeichnet, dass** die Weite des Spalts (33) in einem Bereich zwischen 0,5 % und 3 % der gleichgerichteten lichten Weite der Arbeitskammer (28) liegt.

11. Vorrichtung nach einem der Ansprüche 1 bis 10, **dadurch gekennzeichnet, dass** das Steuergehäuse (25) einen oder mehrere Durchlässe (22) aufweist, über welche das Arbeitsfluid (29) aus der Arbeitskammer (28) in den Spülgasauslass (7) und/oder die Umgebung entweichen kann.

12. Vorrichtung nach einem der Ansprüche 1 bis 11, **dadurch gekennzeichnet, dass** der Ventilkörper (30) tellerförmige, kegelförmige oder kugelförmige Gestalt besitzt oder von einer Membran oder Klappen gebildet ist.

13. Vorrichtung nach einem der Ansprüche 1 bis 12, **dadurch gekennzeichnet, dass** die Steuerleitung (9) mit der Leitung zur Zufuhr von Schutzgas (4) in den Spülgaseinlass (3) strömungstechnisch verbunden ist und das Arbeitsfluid (28) vom Schutzgas (4) gebildet ist.

14. Vorrichtung nach einem der Ansprüche 1 bis 13, **dadurch gekennzeichnet, dass** im Spülgasauslass (7) stromaufwärts des Auslassventils (8) eine Durchflussmesseinrichtung (10) oder ein Durchflusswächter angeordnet ist.
